# EUROPEAN PATENT APPLICATION

(11) **EP 1 128 306 A1**
(43) Date of publication of application: **29.08.2001**
(21) Application number: 01301528.4
(22) Date of filing: 21.02.2001
(51) Int. Cl.: G06F 17/60

(54) **Market transaction automatic contracting apparatus and market transaction automatic contracting system**

(30) Priority: 24.02.2000 JP 2000048191
(71) Applicant: Terada, Yutaka, Yokohama-shi, Kanagawa-ken (JP); Wakiyasu, Shuji, Matsudo-shi, Chiba-ken (JP); Ishikawa, Toshiyuki, Tokyo (JP); Yamazaki, Satoshi, Kashiwa-shi, Chiba-ken (JP)
(72) Inventor: Terada, Yutaka, Yokohama-shi, Kanagawa-ken (JP); Wakiyasu, Shuji, Matsudo-shi, Chiba-ken (JP); Ishikawa, Toshiyuki, Tokyo (JP); Yamazaki, Satoshi, Kashiwa-shi, Chiba-ken (JP)
(74) Representative: Smith, Norman Ian

(57) **Abstract**

A market transaction automatic contracting system includes a market transaction automatic contracting apparatus (1) and transaction terminals (A, B ...) connected to the market transaction automatic contracting apparatus by communication circuits. The market transaction automatic contracting apparatus has a transaction conditions storage section (6) for storing transaction conditions set beforehand by participants, an offer/bid setting/distributing device (2) for reading offers (PrA, PrB ...) and bids (PpA, PpB ...) made by the participants, and, with consideration to the transaction conditions, setting and distributing best offers (bPr) and best bids (bPp) most significant for each participant, an offer/bid match determining device (3) for determining whether a match occurred between an offer and a bid, and a contracting device (5) responsive to a match between an offer and a bid for concluding a transaction contract between the parties. The system prevents losses occurring because of transaction errors, reduces transaction costs, speeds up transactions, and greatly improves the efficiency of market transactions.

## Description

This invention relates to a market transaction automatic contracting apparatus and a market transaction automatic contracting system for use by multiple participating parties to conclude contracts with one another regarding objects for which offers and bids have been made by the participating parties.

In recent years interest rate swaps have become an indispensable part of derivative trading in the financial institution market.

An interest rate swap is a swap between a fixed interest rate and a floating interest rate called LIBOR (London Interbank Offered Rate). In a yen-yen swap, a fixed interest rate is swapped for the six-month LIBOR once every six months.

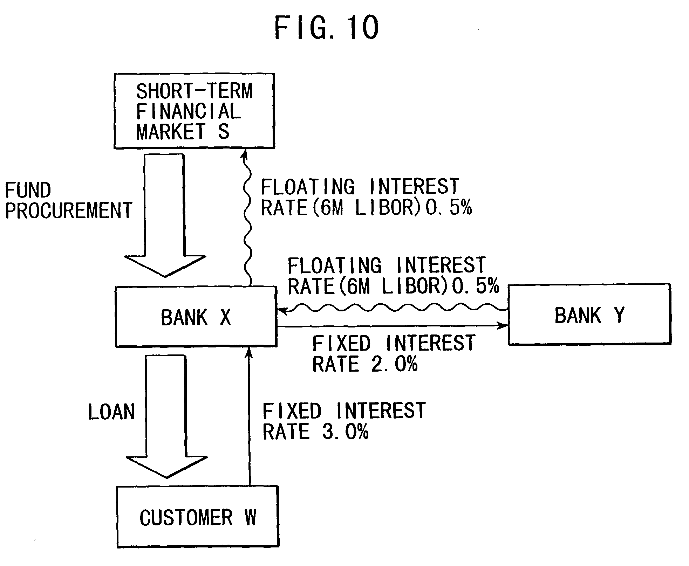

FIG. 10 is a diagram outlining an interest rate swap deal. Bank X procures funds from the short-term financial market S and lends the procured funds (¥10,000 million, for example) to customer W at a long-term fixed interest rate. Bank X receives a fixed interest rate of, say, 3.0% from customer W and pays a floating interest rate (six-month LIBOR) to the short-term financial market S.

Bank X then makes an interest rate swap agreement with Bank Y under which Bank X pays Bank Y a fixed interest rate of, say, 2% and receives the floating interest rate (six-month LIBOR) from Bank Y. Assume that the contract term is 10 years and the principal is equal to the procured amount of ¥10,000 million. Six months after the conclusion of the interest rate swap, Bank X pays Bank Y ¥100 million (= ¥10,000 million (notional principal) x 2% (fixed interest rate) ÷ 2 (half year)). Assuming the six-month LIBOR to be 0.5% at this time, Bank X receives ¥25 million (= ¥10,000 million x 0.5% ÷ 2 (half year)) from Bank Y The interest rate swap is repeated every half year over the ten-year term of the contract. The contract term of such interest rate swaps is usually between one and thirty years, increasing in one-year or half-year increments. When the contract term is ten years, for example, the deal is called a ten-year swap.

Based on the floating interest rate under this interest rate swap, the amount Bank X pays the short-term financial market S and the amount Bank X receives from Bank Y are the same and cancel out. Based on the fixed interest rate, since Bank X receives (3.0% ÷ 2) from customer W and pays (2.0% ÷ 2) to Bank Y, it realizes a profit equal to the difference of 0.5% after six months.

At first glance, it would seem that this interest rate swap works to the advantage of Bank X and the disadvantage of Bank Y. However, the floating interest rate reset every six months under this interest rate swap may well rise with passage of time from the initial 0.5% to finally produce an economic effect equivalent to receiving a fixed interest rate of 2%. This is the theoretical basis of the interest rate swap system and it usually operates to establish an equitable exchange deal.

The reason that banks engage in interest rate swaps to pay a fixed interest rate and receive a floating interest rate is generally as follows. One business of banks is to procure three-month or six-month short-term funds from the financial market at a floating interest rate, lend the procured funds to customers at a long-term fixed interest rate, and make a profit on the difference between the interest on the loans and the interest on the procured funds. The bank may, however, incur a huge loss if the interest rate on the procured funds should rise to exceed the interest rate on the customer loans. An interest rate swap makes it possible to avoid this kind of loss.

While this is the main reason for conducting an interest rate swap, such swaps may, depending on how they are managed, also produced a profit. A market has in fact been established for trading derivatives (derivative instruments) based on fixed interest rates for different periods.

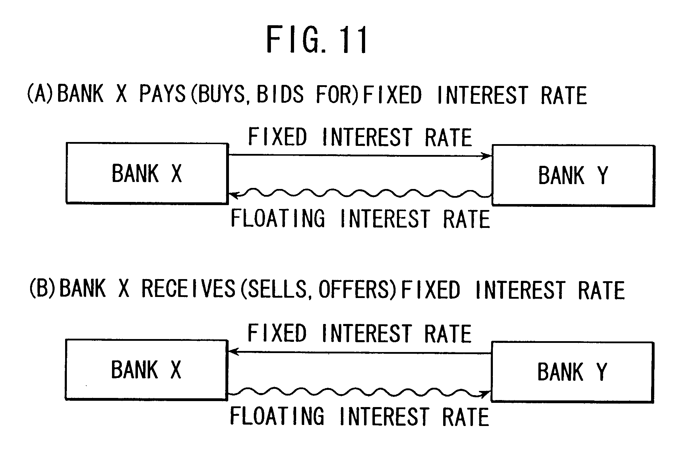

FIG. 11 is a diagram for explaining how interest rate swap transactions work. As shown, interest rate swaps are conducted in two ways. In (A), Bank X pays (buys, bids for) a fixed interest rate to and receives a floating interest rate from Bank Y. In (B), Bank X receives (sells, offers) a fixed interest rate from Bank Y and pays a floating interest to Bank Y.

In today's market, specialists (brokers) play an indispensable role in ensuring that interest rate swap transactions proceed smoothly between financial institutions. The broker intermediates swaps by collecting orders from all financial institutions at a single place and matching the fixed interest rate bids and offers made by the different financial institutions.

Although only interest rates are exchanged, the notional principals involved in interest rate swap transactions are still very large. The possibility of huge losses is therefore involved. Consider, for instance, the case where one of the banks that is a party to the swap becomes unable to fulfill its payment obligation and the other bank attempts to make a completely identical transaction with another bank. As the value of the fixed interest rate (selling/buying value, price) has now changed, the bank looking for a new partner may, depending on the circumstances, have to take an enormous loss. Therefore, as part of their management policy, banks that participate in interest rate swaps set strict transaction conditions with respect to all other banks. These transaction conditions are established in light of the other bank's credit rating to define such matters as how large a transaction with the bank is acceptable up to what year.

This means that a broker must know the transaction conditions for all banks and, when matching fixed interest rate offers and bids, to be able to promptly decide, in consideration of the transaction conditions between the two banks, whether or not the received orders can be consummated.

In fact, however, it is beyond the ability of the human brain to memorize the transaction conditions among all banks. Where interest rate swaps are transacted among one hundred banks, for example, the banks can be paired in 5,000 ways. When the fact that the conditions are often not the same on both sides of a given pair (bank A and bank B may not give each other identical credit ratings) is further taken into account, the number of combinations increases to ten thousand. These myriad combinations all have to be compared and processed.

Moreover, it often happens that each bank will place more than one order. This increases the required amount of comparing and processing to far beyond human capacity.

Mistakes have therefore become a highly common element in brokered deals. Although this may be unavoidable, it makes it difficult for banks to avoid large losses.

Conducting transactions through a broker is also not only costly but so slow as to be a major cause of financial market inefficiency.

This invention was accomplished in light of the foregoing circumstances. Its object is to provide a market transaction automatic contracting apparatus and a market transaction automatic contracting system that eliminate losses caused by transaction errors, reduce transaction costs, increase transaction speed, and markedly improve financial market efficiency.

For achieving this object, this invention provides a market transaction automatic contracting apparatus for use by parties concluding contracts with each other regarding offers and bids placed on objects by multiple participating parties, the apparatus comprising a transaction conditions storage section for storing transaction conditions set beforehand by participants, offer/bid setting/distributing means for reading offers and bids made by the participants, and, with consideration to the transaction conditions, setting and distributing best offers and best bids most significant for each participant, offer/bid match determining means responsive to offers and bids made by the participants or responsive to new offers and bids made by the participants based on the distributed best offers and best bids for determining whether a match occurred between an offer and a bid, and contracting means responsive to a match between an offer and a bid for concluding a transaction contract between the participant making the offer and the participant making the bid as contracting parties.

This aspect of invention includes the case where the objects are fixed interest rates, the participants are financial institutions, and the offers and bids are offers and bids for fixed interest rates in interest rate swaps between fixed interest rates and floating interest rates in the financial institution market.

This aspect of the invention also includes the case where the offer/bid setting/distributing means reads offers, bids and transaction amounts quoted by the participants and, with consideration to the transaction conditions, sets and distributes a best offer and a best bid most significant for each participant.

This aspect of the invention also includes the case where the offer/bid setting/distributing means, when distributing the best offer and best bid, also distributes the transaction amounts quoted by the participants making the best offer and the best bid.

This aspect of the invention also includes the case where the transaction conditions considered by the offer/bid setting/distributing means are credit conditions relating to credit ratings set by the participant concerned with respect to the other participants.

This aspect of the invention also includes the case where the credit conditions are credit charge and amount limit.

This aspect of the invention also includes the case where the offer/bid setting/distributing means regulates the offer and bid distributed to a financial institution whose credit is small based on credit charge to make the distributed offer high and the distributed bid low.

This aspect of the invention also includes the case where the market transaction automatic contracting apparatus further comprises an agreement confirmation means responsive to a determination by the offer/bid match determining means that an offer and a bid match for determining, with consideration to the transaction amounts of the parties and incidental conditions among the transaction conditions of the parties, whether or not the transaction amounts and the incidental conditions match, and, if they do not, presenting the transaction amounts and the incidental conditions to both parties to confirm their agreement, the contracting means concluding a transaction contract after the confirmation by the agreement confirmation means.

This aspect of the invention also includes the case where the incidental conditions are mutual termination and cash settlement.

This aspect of the invention also includes the case where the transaction conditions can be set individually for each contract term or each transaction party.

This invention also provides a market transaction automatic contracting system for use by parties concluding contracts with each other regarding offers and bids placed on objects by multiple participating parties, the system comprising:
a market transaction automatic contracting apparatus including a transaction conditions storage section for storing transaction conditions set beforehand by participants, offer/bid setting/distributing means for reading offers and bids made by the participants, and, with consideration to the transaction conditions, setting and distributing a best offer and a best bid most significant for each participant, offer/bid match determining means responsive to offers and bids made by the participants or responsive to new offers and bids made by the participants based on the distributed best offers and best bids for determining whether a match occurred between offer and bid, and contracting means responsive to a match between an offer and a bid for concluding a transaction contract between the participant making the offer and the participant making the bid as contracting parties, and
transaction terminals connected to the market transaction automatic contracting apparatus through communication circuits to be operable by the participants for sending information to and receiving information from the market transaction automatic contracting apparatus.

This aspect of invention includes the case where the objects are fixed interest rates, the participants are financial institutions, the offers and bids are offers and bids for fixed interest rates in interest rate swaps between fixed interest rates and floating interest rates in the financial institution market.

This aspect of the invention also includes the case where the transaction terminals are equipped with displays and the offer/bid setting/distributing means distributes the best offer and the best bid for display on the displays of the transaction terminals and, upon determining with consideration to the transaction conditions how significant the displayed best offer and best bid are for the participants operating the transaction terminals, simultaneously distributing determined significance information together with the best offer and best bid.

This aspect of the invention also includes the case where the determined significance information includes information for displaying the best offer or best bid in a first color when a participant operating a transaction terminal can immediately conclude a contract with the participant offering the displayed best offer or bid, information for displaying the best offer or best bid displayed in a second color when the participant operating the transmission terminal can conclude a contract if agreement is reached on the transaction conditions, and information for displaying the best offer or best bid in a third color when the offer or bid was sent by the participant operating the transaction terminal.

This aspect of the invention also includes the case where the transaction terminals are equipped with displays to enable a participant operating a transaction terminal who sets transaction conditions to input and send them to the market transaction automatic contracting apparatus using a transaction conditions input screen displayed on the display.

This aspect of the invention also includes the case where, among the transaction conditions input using the transaction conditions input screen, all credit charge and amount limit entries are made at the same time over the period that their values remain constant and are automatically graphed on a graph whose vertical axis represents term and whose horizontal axis represents credit charge value or amount limit.

As explained in the foregoing, the setting and distribution of the best offer and the best bid for each participant are conducted with consideration to the transaction conditions. The accuracy of the best offer and best bid information can therefore be markedly improved. Moreover, once offers and bids have been made, the participants can automatically establish transactions without going through a broker. Transactions costs are therefore greatly reduced and since trading proceeds substantially in real time, the time needed to reach an agreement can be greatly shortened.

The above and other objects and features of the invention will become apparent from the following description made with reference to the drawings, in which:-
FIG. 1 is a block diagram showing the overall architecture of a market transaction automatic contracting apparatus and a market transaction automatic contracting system according to this invention,
FIG. 2 is a diagram showing an example of credit charges stored in a credit conditions storage section,
FIG. 3 is a diagram showing an example of amount limits stored in the credit conditions storage section,
FIG. 4 is a diagram showing an example of mutual terminations and cash settlements stored in an incidental conditions storage section,
FIG. 5 is a diagram showing a transaction conditions input screen,
FIG. 6 is a diagram showing an input screen for placing an order,
FIG. 7 is a diagram showing a market screen displayed on a transaction terminal,
FIG. 8 is a diagram for explaining new order placement,
FIG. 9 is a flowchart showing the control procedures executed by the market transaction automatic contracting apparatus,
FIG. 10 is a diagram for explaining an interest rate swap, and
FIG. 11 is diagram for explaining two types of interest rate swaps.

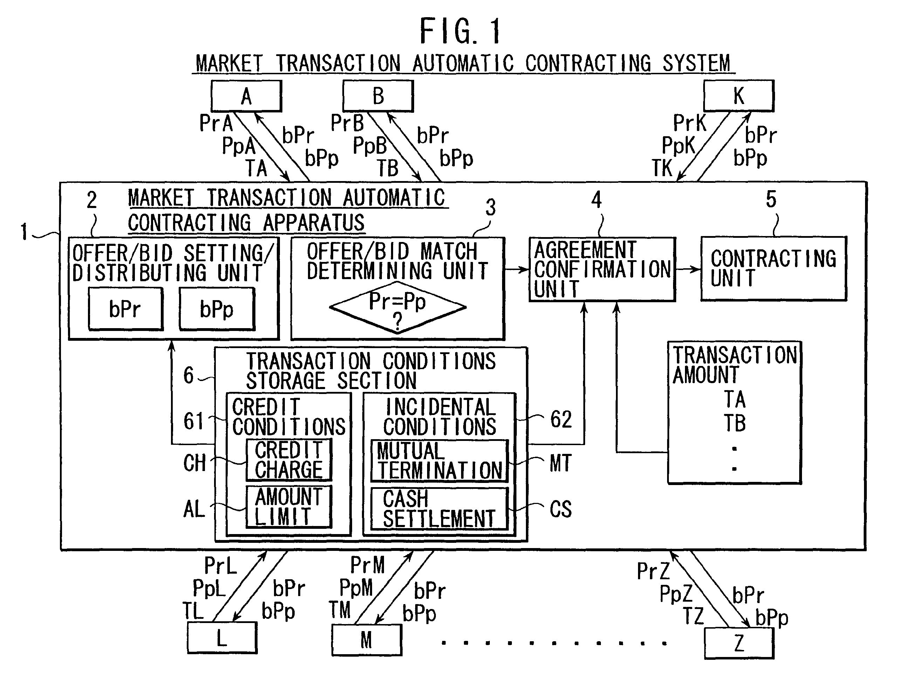

FIG. 1 is a block diagram showing the overall architecture of a market transaction automatic contracting apparatus and a market transaction automatic contracting system according to this invention. The illustrated market transaction automatic contracting system comprises a market transaction automatic contracting apparatus 1 and transaction terminals A, B ... connected to the market transaction automatic contracting apparatus 1 to be operable by individual participants. The system will be explained with respect to the case where the market transactions are interest rate swaps and the participants are banks. The transaction terminals A, B ... are operated by dealers (participants) at the individual banks. Depending on the circumstances, the transaction terminals A, B ... will sometime be called banks A, B ... or participants A, B ....

The market transaction automatic contracting apparatus 1 is used by multiple participating parties to conclude contracts with one another regarding objects (fixed interest rates in this embodiment) for which offers Pr and bids Pp have been made by the participating parties. As illustrated, the market transaction automatic contracting apparatus 1 comprises an offer/bid setting/distributing unit 2, an offer/bid match determining unit 3, an agreement confirmation unit 4, a contracting unit 5 and a transaction conditions storage section 6.

The units 2, 3, 4 and 5 are configured in a host computer capable of high-speed data processing and are specifically configured as software functions enabling a CPU (central processing unit) to execute programs stored in a ROM (read-only memory). The transaction conditions storage section 6 is a database configured in a large-capacity memory unit. The transaction terminals A, B ... are computers, either dedicated computers for this system or general-purpose computers. The market transaction automatic contracting apparatus 1 and the transaction terminals A, B ... are connected by communication lines to enable two-way exchange of various information therebetween.

The transaction conditions storage section 6 stores transaction conditions set by the participant beforehand.

The offer/bid setting/distributing unit 2 reads the offers PrA, PrB ..., the bids PpA, PpB ..., and the transaction amounts TA, TB ... quoted by the participant placing orders, sets a best offer bPr and a best bid bPp most significant for each participant with consideration to the transaction conditions and distributes the same to the transaction terminals A, B ... of the participants.

Each offer PrA, PrB ... is the fixed interest rate (in %) the participant is, in an interest rate swap, willing to accept as the fixed interest rate in a contract wherein it is to receive from the counterparty the amount obtained by multiplying the transaction amount by the fixed interest rate, i.e., is the fixed interest rate the participant is willing to sell. Each bid PpA, PpB ... is the fixed interest rate (in %) the participant is, in an interest rate swap, willing to accept as the fixed interest rate in a contract wherein it is to pay to the counterparty the amount obtained by multiplying the transaction amount by the fixed interest rate, i.e., is the fixed interest rate the participant is willing to buy.

Each transaction amount TA, TB ... is the notional principal in an interest rate swap wherein the amount obtained by multiplying a notional principal by a fixed interest rate and the amount obtained by multiplying the notional principal by a floating interest rate are paid/received to/from the counterparty.

When the participants A, B ... have made offers PrA, PrB ... and bids PpA, PpB ... or when they have made new offers PrA, PrB ... and bids PpA, PpB ... based on the distributed best offer bPr and best bid bPp, the offer/bid match determining unit 3 determines whether or not a match has occurred between an offer PrA, PrB ... and a bid PpA, PpB ....

When the offer/bid match determining unit 3 determines that an offer PrA, PrB ... matches a bid PpA, PpB ..., the agreement confirmation unit 4, treating the participant making the offer and the participant making the bid as parties, determines with consideration to the transaction amounts quoted by the respective parties and the incidental conditions among the transaction conditions of the parties, whether or not the transaction amounts TA, TB ... and the incidental conditions (MT, CS) match completely and, if they do not, sends the transaction amounts TA, TB ... and the incidental conditions (MT, CS) to both parties to confirm the agreement of both parties.

When an offer PrA, PrB ... and a bid PpA, PpB ... match, the contracting unit 5 concludes a transaction contract between the parties.

The units 2, 3, 4 and 5, the transaction conditions storage section 6 and the transaction terminals A, B ... will now be explained in detail.

The configuration of the transaction conditions storage section 6 will be explained first. Banks A, B ... participating in the dealing input the transaction conditions they have set with respect to all banks that are potential counterparties (C/P) in the transaction conditions storage section 6. As one bank may have two or more dealers (two or more transaction terminals), a bank can set transaction conditions with respect to itself.

The transaction conditions storage section 6 is composed of a credit conditions storage section 61 and an incidental conditions storage unit 62. The conditions stored in the credit conditions storage section 61 are credit conditions set according to how highly the counterpary bank's credit is rated (credit rating). In this embodiment, they are credit charge CH and amount limit AL. The conditions stored in the incidental conditions storage unit 62 are mutual termination and cash settlement CS.

The credit charge CH is an amount charged when contracting with a bank whose credit is considered insufficient. In the case of a fixed interest rate swap, for example, this charge is added to the counterparty's offer to set a higher offer or is subtracted from the counterparty's bid to set a lower bid. A bank with insufficient credit is therefore put at a disadvantage in striking a deal because the other party uses the cash settlement CH to raise its offer or lower its bid. The contract term of an interest rate swap is usually one year, one and a half years, two years, three to twenty full years, twenty-five years or thirty years. The credit charge is separately set for each such term between one and thirty years.

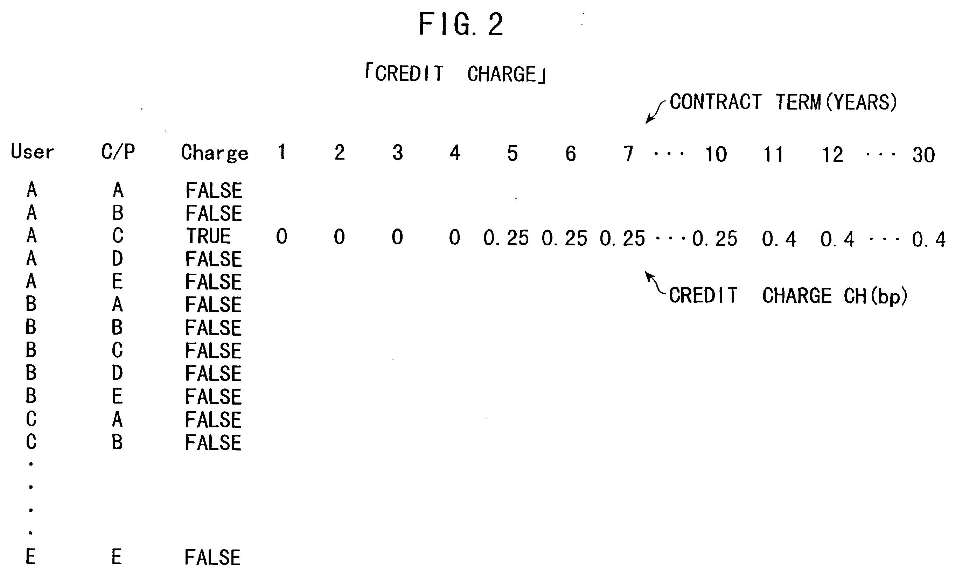

FIG. 2 is a diagram showing an example of credit charges stored in the credit conditions storage section. The credit charges CH set by each of banks A, B, C, D and E (Users) with respect to each bank A, B, C, D and E as a counterparty C/P are shown for the individual contract terms in basis price (basis point) bp units (lbp = 0.01%). In the illustrated example, bank A does not set credit charges with respect to banks A, B, D and E but, in consideration of bank C's insufficient credit from the fifth year onward, sets a credit charge with respect to bank C of 0.25 bp for contracts with terms of 5 to 10 years and of 0.40 bp with respect to contracts with terms of 11 years or more. FALSE means that the condition (credit charge CH in this example) is OFF (disabled) and TRUE means that it is ON (enabled).

The amount limit AL is the limit on the amount of the notional principal and is set based on the degree of credit (credit rating) with respect to the counterparty. The amount limit AL is set high for a bank with good credit and low for a bank with poor credit. In an extreme case, it may be set at zero to avoid any dealing with the bank. Like the credit charge CH the amount limit is also separately set for each contract term between one and thirty years.

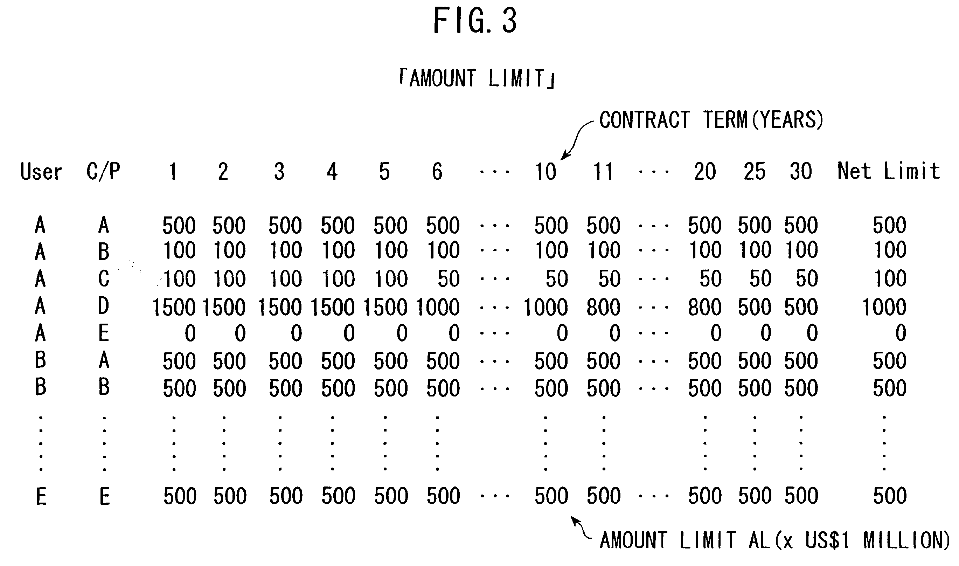

FIG. 3 is a diagram showing an example of amount limits stored in the credit conditions storage section. As shown, each bank A, B, C, D and E (User) sets an amount limit for each contract term with respect to each bank A, B, C, D and E as a counterparty C/P. The amount limits AL are indicated in units of one million US dollars. Under Net Limit (NL) appearing at the far right are shown maximum amounts permissible per contract irrespective of contract term. Setting a net limit NL prevents conclusion of a contract whose amount exceeds the credit line.

Focusing on bank A in FIG. 3, with respect to bank B, bank A has set an amount limit of $100 million (= 100 x $1 million) for all contract periods from 1 to 30 years and a net amount limit NL of $100 million (US dollars; herein after the same). With respect to bank C, it has set an amount limit AL of $100 million for contract periods of 1 to 5 years and, in consideration of bank B's insufficient credit beyond 5 years, has set a lower amount limit AL of $50 million for contract periods of 6 or more years. With respect to bank D, which has a high credit rating, it has set an amount limit AL of $1,500 million for contract periods of 1 to 5 years, of $1,000 million for contract periods of 6 to 10 years, of $800 million for contract periods of 11 to 20 years and of $500 million for contract periods of 25 and 30 years, and has set a net amount limit NL of $1,000 million. With respect to bank E, it has set all amount limits AL at zero. This means that bank A excludes bank E as a possible counterparty because of bank E's poor credit rating.

A mutual termination MT stored in the incidental conditions storage unit 62 indicates that the bank concerned reserves the right to terminate any contract concluded before maturity. Say, for example, bank A considers bank B's credit to be adequate up to 10 years but inadequate for longer periods. In this case bank A will specify a mutual termination MT with respect to bank B such that it can exercise a mutual termination after the passage of 10 years even if the contract was concluded for a longer period such as 20 years.

By cash settlement CS is meant the termination of a contract by settling latent profit on a date set in advance. Say, for example, a 10-year cash settlement is stipulated in a 20-year contract. Although the deal was made at a 20-year price, it is forcibly terminated under the cash settlement CS provision by payment of a termination settlement amount equal to the latent profit calculated for the ten-year period between the date of the termination and original contract maturity date.

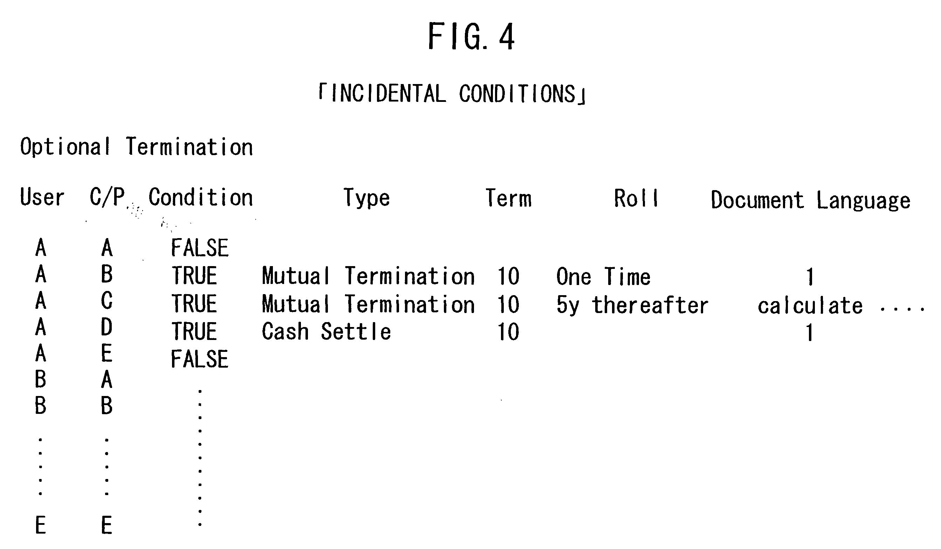

FIG. 4 is a diagram showing an example of mutual terminations and cash settlements stored in the incidental conditions storage section. As shown, bank A has set a mutual termination MT after 10 years with respect to bank B. This means that a one-time mutual termination can be exercised when ten years of the contract period have elapsed. As in the case of bank B, bank A has also set a mutual termination MT after 10 years with respect to bank C. However, it has not limited itself to a one-time mutual termination after ten years but has further specified another mutual termination 5 years thereafter. With respect to bank D, bank A has specified a cash settlement CS after ten years under which the contract is forcibly terminated before maturity at the specified cash settlement CS date by receipt/payment of latent profit for the remainder of the contract period. The notations in the Document Language column at the far right designate how the set conditions are to be expressed in the transaction contract document. The notation 1 means that the bank has selected document format No. 1 from among, say, twenty different numbered document formats. When no document language numeral is specified, the bank inputs a notation indicating its own format (calculate ... in this example).

As mentioned above, the transaction conditions consist of the credit conditions (credit charge CH and amount limit AL) and the incidental conditions (mutual termination MT and cash settlement CS). These transaction conditions are input through the transaction terminals A, B ... at the individual banks and forwarded to the market transaction automatic contracting apparatus 1 to be stored in the transaction conditions storage section 6. The method of inputting the transaction conditions by use of the transaction terminals A, B ... will now be explained.

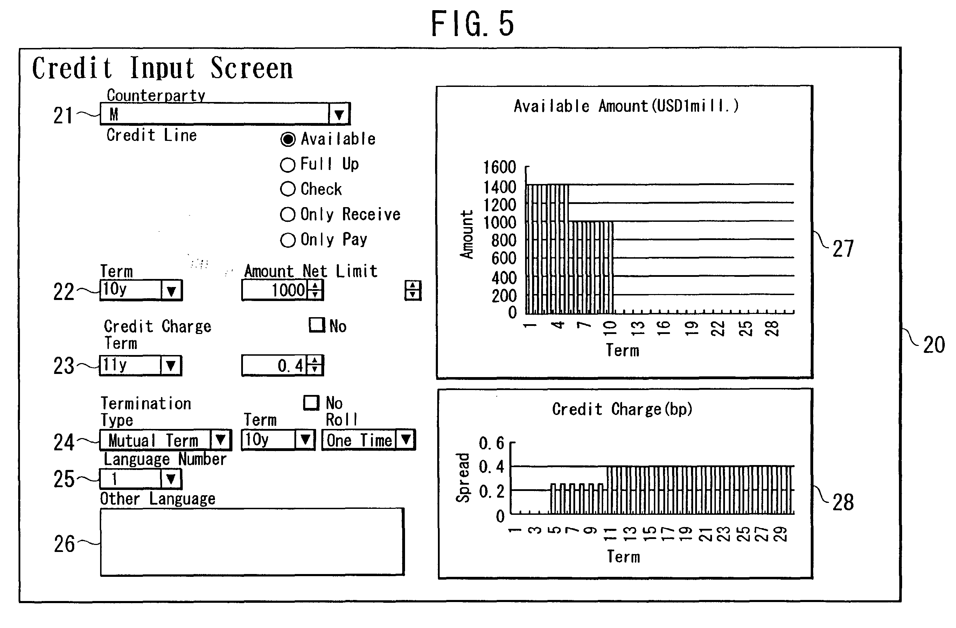

FIG. 5 is a diagram showing a transaction conditions input screen 20. The operator of the transaction terminal brings up input screen 20 when transaction conditions are to be input. Data can be entered by clicking the mouse on the black triangles and selecting the desired item from the data menu that appears. Data entry is therefore a simple operation not requiring use of a keyboard.

The explanation will be continued with reference to the case where bank A sets transaction conditions with respect to bank M. The counter party is designated by entering M in window 21 at the upper left. Available, Full Up, Check, Only Receive and Only Pay under the window 21 indicate basic dealing particulars. Each item can be turned on and off by clicking with the mouse. Turning on Available indicates that an amount limit is to be set with respect to the counterparty (bank M). Turning on Full Up indicates that a deal cannot be made with bank M. Turning on Check indicates that when a contract is to be concluded with bank A, a check is to be made to confirm who the counterparty is. Turning on Only Receive, indicates that the only contract that can be concluded with bank M is one for receiving (one for selling a fixed interest rate). Turning on Only Pay indicates that the only contract that can be concluded with bank M is one for paying (one for buying a fixed interest rate).

Input section 22 is activated when one of Available, Full Up, Check, Only Receive and Only Pay are turned on. When Available is turned on, for example, the number of contract years is entered in the Term window, the amount limit is entered in the Amount window in units of $1 million, and the net amount limit is entered in the Net Limit window in units of$1 million. If 5 (years) is entered in the Term widow and 1400 ($1,400 million) is entered in the Amount widow, a bar rises to $1,400 million at each of the fist to fifth years in the graph displayed in window 27 on the right. If 10 (years) is then entered in the Term window and 1000 ($1,000 million) in the amount window, bars rise to $1,000 million at each of the sixth to tenth years in the graph in window 27. Thus amounts that would ordinarily have to be entered year by year starting from the first year can be entered all at once by a single entry, provided that the amounts are the same. Moreover, the result is automatically graphed for confirmation.

The procedure is the same when Check, Only Receive or Only Pay is turned on, i.e., the number of years is entered in Term window of the input section 22 and the amount limit for each period is entered in the Amount window.

Input section 23 is for entering credit charge. The number of contract years is entered in the Term window and the credit charge amount in the neighboring window. A graph reflecting the entered figures again appears automatically. The fact that the credit charge is ordinarily increased with increasing length of the contract term is taken into consideration in representing the graph in the lower right window 28. For example, when 5 (years) is entered in the Term window and 0.25 (bp) in the credit charge window, bars rise to 0.25 bp at every year between the fifth and thirtieth. Then when 11 (years) is entered in the Term window and 0.4 (bp) in the credit charge window, the bars appearing at the eleventh to thirtieth year of the graph are changed to bars rising to 0.40 bp. Thus credit charges that would ordinarily have to be entered year by year starting from the first year can be entered all at once by a single entry, provided that the amounts are the same. Moreover, the result is automatically graphed for confirmation.

Input section 24 is for entering incidental conditions. These include mutual termination and cash settlement CS. If exercise of mutual termination is desired, Mutual Termination is displayed in the Type window. If exercise of cash settlement is desired, Cash Settle is displayed in the Type window. The time of exercise is entered in the Term window as, for example, 10 (years). If mutual termination MT is to be exercisable only once at the designated time of exercise, One Time is entered in the Roll window. If it is to be exercisable not only at the designated time of exercise but also to be exercisable two years later, 2y Thereafter is entered in the Roll window.

Input window 25 is for entering the number of a document format selected from among a number of available formats for expressing the incidental conditions in the contract document. Box 26 at the bottom is for entering the bank's own language for expressing the incidental conditions in the contract document.

The input screen for submitting an order to the market transaction automatic contracting apparatus 1 using a transaction terminal A, B ... will now be explained. Further, while transaction amount limit AL is set on a US dollar base, actual transactions are conducted using the currency of a country in which a participant lives as will be described later. The country currency is calculated in terms of US dollars using, for example, the foreign exchange rate as of the last day of the month before a month in which the transactions are conducted.

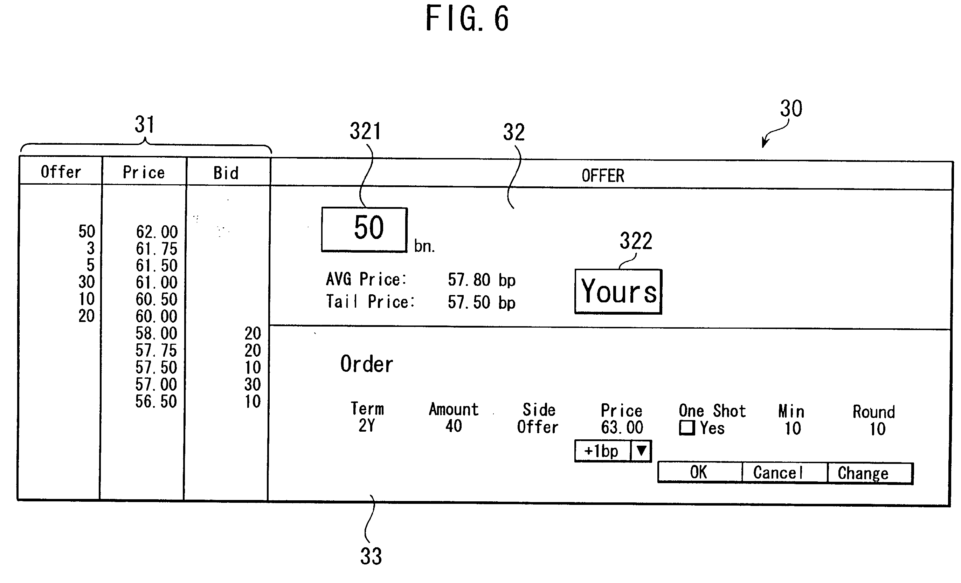

FIG. 6 is a diagram showing an input screen 30 for placing an order. The operator of the transaction terminal brings up input screen 30 when bank A, B ... wishes to place an order by submitting an offer PrA, PrB ..., a bid PpA, PbB ... and a transaction amount TA TB ... to the market transaction automatic contracting apparatus 1. The input screen 30 is composed of a price/transaction amount comparative table 31, an average price confirmation box 32 and an order input box 33. The order input box 33 will be explained at this point and the explanation of the price/transaction amount comparative table 31 and the average price confirmation box 32 will be saved for later.

The contract term is entered by selecting a number of years between 1 and 30 in the Term section. The transaction amount TA, TB ... is entered in units of Japanese ¥1,000 million in the Amount section (the figure 40 shown as an example in the drawing thus indicating ¥40,000 million). Offer or Bid is entered in the Side section to indicate whether bank A, B ... desires to sell or buy a fixed interest rate. The price offered or bid for the fixed interest rate is entered in the Price section in units of basis price bp (= 0.01%). The One Shot section is for indicating whether or not the deal is to be concluded for the whole transaction amount at one time. Checking the Yes box designates a one-shot transaction. When the Yes box is not checked, i.e., when a non-one-shot transaction is acceptable, the minimum acceptable transaction amount is entered in the Min section in units of ¥1,000 million (the figure 10 shown as an example thus indicating ¥10,000 million). This means that no contract is to be made for an amount smaller than the entered minimum. The Round section is also used when a non-one-shot transaction is acceptable. Entering an amount in the Round section indicates that a contract can be made for any multiple of the entered amount up to the transaction amount TA, TB .... Entering 10 (¥10,000 million), for example, means that contracts for transaction amounts of ¥10,000 million, ¥20,000 million, ¥30,000 million and ¥40,000 million (the amount limit) are acceptable.

The OK, Cancel and Change are for accepting, canceling and modifying the entered order information. Clicking OK sends the order information entered in the order input box 33 to the market transaction automatic contracting apparatus 1 and clicking Cancel cancels the entered order information without submitting it. Clicking Change allows the operator to modify the data entered in the different sections of the input box 33. Box 321 of the Price section provides an easy way to change the price at this time. This box contains a list of price increments and decrements for raising or lowering the entered price in multiples of 0.125 bp (= 1/8 bp). To increase the offer or bid entered in the Price section, the operator only needs to use the mouse to scroll through the list and select a desired increment or decrement such as +1 bp, +0.875 bp, +0.625 bp, +0.5 bp, +0.375 bp, +0.25 bp, +0.125 bp, -0.125bp, -0.25 bp .... The offer or bid is automatically and immediately modified to reflect the selection. This feature allows the participant (dealer) to change offers and bids almost instantaneously and thus keep pace with a market that measures the difference between success and failure in seconds.

Once the market transaction automatic contracting apparatus 1 has received the order information (contract term, transaction amount, offer/bid etc.) entered in the input box 33, its units 2, 3, 4 and 5 process the information as explained in the following.

First, the offer/bid setting/distributing unit 2 reads the order information received from the participant's transaction terminal and stores it in a region of RAM (random access memory). It repeats this operation for all of the transaction terminals A, B .... It then searches the order information to find the lowest offer among the offers PrA, PrB ... and the highest bid among the bids PpA, PpB. It defines the lowest offer as best offer bPr and the highest bid as best bid bPp. By "best" is meant the optimum price for concluding a deal. The setting of a best offer bPr and a best bid bPp is carried out separately for each bank and each contract period, with consideration to the credit charges CH and amount limits AL among the transaction conditions stored beforehand in the transaction conditions storage section 6.

For instance, if bank J, bank K and bank L impose credit charges CH on bank M because of bank M's poor credit rating, the offer/bid setting/distributing unit 2 effects control for raising the offers and lowering the bids sent to bank M based on the credit charges CH. More specifically, the offer/bid setting/distributing unit 2 first searches the orders to determine the lowest offer among the offers PrA, PrB, ..., PrJ, PrK, PrL, ... and defines it as the best offer bPr. It then increases the offers PrJ, PrK and PrL received from bank J, bank K and bank L by the amounts of the credit charges these banks impose on bank M, defines the resulting offers PrJ1, PrK1 and PrL1 as the offers of bank J, bank K and bank L, and defines the lowest offer among the offers PrA, PrB, ..., PrJ1, PrK1, PrL1, ... as the best offer with respect to bank M. On the other hand, the offer/bid setting/distributing unit 2 first searches the orders to determine the highest bid among the bids PpA, PpB, ..., PpJ, PpK, PpL, ... and defines it as the best bid bPp. It then decreases the bids PpJ, PpK and PpL received from bank J, bank K and bank L by the amounts of the credit charges these banks impose on bank M, defines the resulting bids PpJ1, PpK1 and PpL1 as the bids of bank J, bank K and bank L, and defines the highest bid among the bids PpA, PpB, ..., PpJ1, PpK1, PpL1, ... as the best bid with respect to bank M.

An explanation will now be made with regard to the case where bank J, bank K and bank L set their amount limits AL with respect to bank M at zero to show that they do not intend to enter a deal with bank M. Ordinarily the offer/bid setting/distributing unit 2 would set the lowest offer among the offers PrA, PrB, ..., PrI, PrJ, PrK, PrL, PrM... contained in the orders as best offer bPr. In this case, however, it excludes the offers PrJ, PrK and PrL received from bank J, bank K and bank L and defines the lowest offer among the offers PrA, PrB, ..., PrI, PrM ... as the best offer with respect to bank M. Similarly, the offer/bid setting/distributing unit 2 would ordinarily set the highest bid among the bids PpA, PpB, ..., PpI, PpJ, PpK, PpL, PpM... contained in the orders as best bid bPp. In this case, however, it excludes the bids PpJ, PpK and PpL received from bank J, bank K and bank L and defines the highest bid among the bids PpA, PpB, ..., PpI, PpM ... as the best bid with respect to bank M.

The market transaction automatic contracting apparatus 1 sends the best offers bPr and the best bids bPp set for the individual banks in the in the foregoing manner to the banks A, B ... together with the transaction amounts and other information contained in the orders place by the banks making the best offer bPr and the best bid bPp. At each of the transaction terminals A, B ..., the sent data is displayed on a market screen showing the current market rates. The participants A, B ... study the market screen to decide whether to conclude a contract.

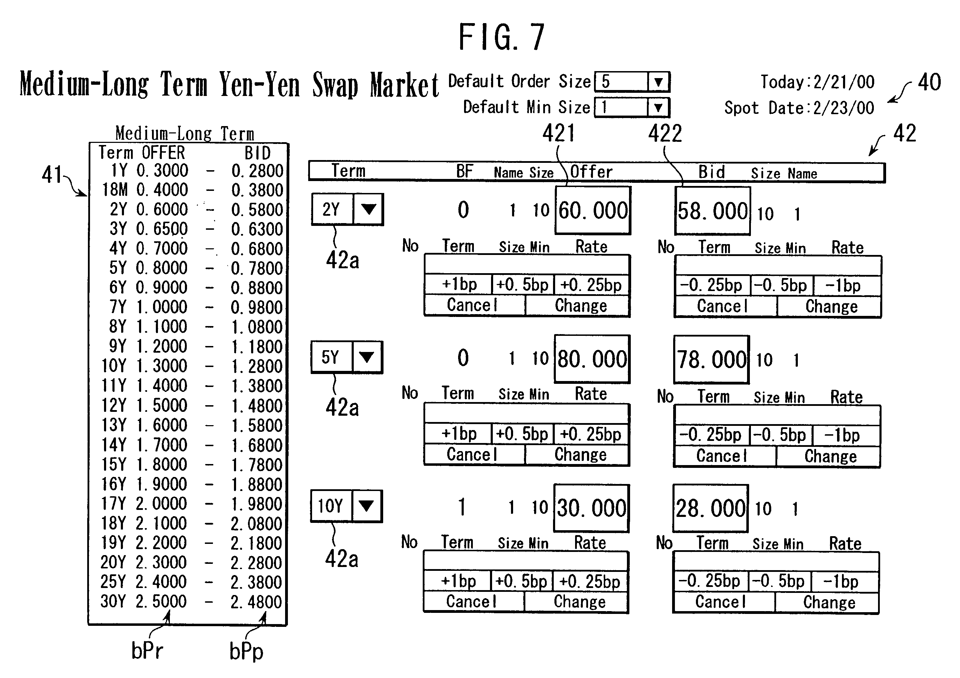

FIG. 7 is a diagram showing a market screen 40 displayed on one of the transaction terminals. The box 41 on the left side of the market screen 40 shows the best prices (best offer bPr and best bid bPp) for the respective terms. The section 42 on the left consists of a number of tiers (three in the illustrated example). Each tier has a Term window on the left. Terms for which details are desired can be set by clicking the buttons of term display windows 42a. Details for multiple terms (2 years, 5 years and 10 years in the illustrated example) can therefore be displayed on a single screen. As the tiers are identically configured, only the content of the upper one designating 2 years will be explained.

In the Offer column near the center of the tier is a display window 421 that displays the best offer bPr (60.000) for a two-year term in basis price units bp (1bp = 0.01%). To the left of the Offer column is the Size column. The transaction amount ordered by the bank quoting the best offer bPr shown in the display window 421 is shown here. The figure 10 in the illustrated example means ¥10,000 million.

Immediately to the right of the Offer column is the Bid column, whose first-tier display window 422 displays the best bid bPp (58.000) for a two-year term also in basis price units bp. To the right of the Bid column is the Size column. The transaction amount ordered by the bank quoting the best bid bPp shown in the display window 422 is shown here. The figure 10 in the illustrated example means ¥10,000 million.

The best prices (best offer and best bid) are shown in the display windows 421 and 422 in the manner of, for instance, 75.000 bp for a best price of 0.75000%. Although a straightforward representation of, say, 1.75000% and 2.75000% would be 175.000 bp and 275.000 bp, the practice in this market is to represent both as 75.000, dropping the initial digit as being obvious to the participants from the contract term. This makes it possible to take in and understand the displayed figure at a glance, as is appropriate for dealers who cannot afford to waste even a moment. In addition, since the best prices are set in detail in the actual transactions, these prices are shown down to the third decimal place so as to approximate to the detailed values.

In the right section 42, the best offers bPr shown in the Offer column and the best bids bPp shown in the Bid column are, in all tiers, each displayed under the control of the offer/bid setting/distributing unit 2 in one of multiple colors according to their significance to the participant viewing them. More specifically, when the offer/bid setting/distributing unit 2 sends the best offers bPr and the best bids bPp for display on the market screen 40 of the individual transaction terminals A, B ..., it determines with consideration to the transaction conditions how significant the best offers bPr and best bids bPp actually displayed are to the participant viewing each market screen 40 and, in order to indicate the degree of significance, displays the best offers bPr and best bids bPp each in a color selected to reflect the result of the determination.

Consider, for example, the case where it is determined that the incidental conditions (MT and CS) of the participant viewing a particular market screen 40 match those of the participant who quoted the displayed best offer bPr or best bid bPp and, therefore, that a contract can be immediately concluded between the two participants. In this case, the offer/bid setting/distributing unit 2 displays the best offer bPr or best bid bPp concerned in green. In a case where the incidental conditions (MT and CS) currently do not match but the possibility of being able to conclude a contract will be high if one or both participants acquiesces, the best offer bPr or the best bid bPp is displayed in yellow. In the case where the displayed best offer bPr or best bid bPp is the participant's own offer or bid, the best offer bPr or the best bid bPp is displayed in red. Red display takes precedence over green and yellow display.

If, for example, all banks other than bank M set their amount limits AL with respect to bank M at zero, the offer/bid setting/distributing unit 2 does set best offers bPr and best bid bPp with respect to bank M. In this case, the display windows in the Offer and Bid columns on the screen of bank M's transaction terminal M will appear blank.

If, upon considering the information displayed in the market screen 40, the dealer at one of the transaction terminals A, B ... should desire to sell (offer) a fixed interest rate under conditions of, for example, a 2-year contract term, a transaction amount of ¥50,000 million and 0.5900% (59.00 bp), the dealer clicks the 2-year contract period display window 421 in the Offer column of the market screen 40. In response to this clicking operation (designation), the market screen 40 of the transaction terminal changes back to the input screen 30 used to place an order. The dealer uses the input screen 30 to place a new order.

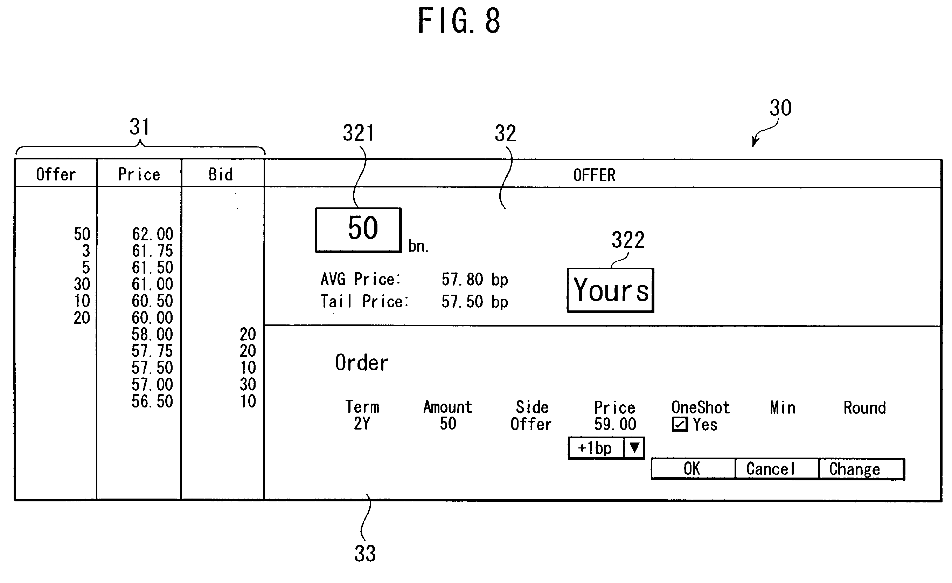

FIG. 8 is a diagram for explaining new order placement. When the dealer clicks the display window 421, an input screen 30 like the one in this figure appears. The price/transaction amount comparative table 31 of the input screen 30 lists the prices on either side of the price displayed in the display window 421 (offer of 60.00 bp (0.6000%) for 2-year contract period in this example) and the current total transaction amount for each price. In the example shown in FIG. 8, the total transaction amount at an offer of 60.000 is 20 (¥20,000 million) and the total transaction amount at an offer of 62.000 is 50 (¥50,000 million), while the total transaction amount at a bid of 58.000 (0.5800%) is 20 (¥20,000 million) and the total transaction amount at a bid of 56.000 (0.5650%) is 10 (¥10,000 million). The total transaction amounts referred to here are the sums of the transaction amounts quoted by all participants whose incidental conditions (MT and CS) match those of the participant that clicked the display window 421. The situation of each of the participants concerned is therefore such as to make immediate conclusion of a contract possible.

A participant desiring to place a new order progressively enters the order information in the appropriate sections of the order input box 33 in the input screen 30, as shown in FIG. 8. In the illustrated example, 2 (years) has been entered under Term, 50 (¥50,000 million) under Amount, "Offer" under Side, and 59.000 bp (0.59%) under Price. The One Shot column has been checked Yes.

If dealer decides that before placing the new order it is necessary to know the average price in the case of conducting a ¥50,000 million one-shot transaction on the offer (sell) side at the current point in time, the dealer enters the transaction amount (50 in this example) in the transaction amount input box 321 of the average price confirmation box 32 . When the entry is completed, the market transaction automatic contracting apparatus 1 uses the figures in the price/transaction amount comparative table 31 to calculate a weighted average price. When the participant concerned wants to sell a fixed interest rate, the counterparty will be a participant who made a bid. The market transaction automatic contracting apparatus 1 therefore looks at the bids of all buy orders submitted for the term concerned (two years in this example) and among these includes in the calculation each bid from the highest downward until the total transaction amount becomes 50. In this example, therefore, the bids of 58.00 bp, 57.75 bp and 57.50 bp are included in the calculation and each bid is weighted by its transaction amount (20, 20 and 10) to obtain the weighted average price. The calculated weighted price of 57.80 bp is displayed in the AVG Price section of the average price confirmation box 32. The lowest bid of 57.50 bp is displayed in the Tail Price section as the worst price.

Should the dealer decide to make a deal at the weighted average price, contracts to sell the fixed interest rate can be concluded by clicking the button 322 marked Yours. This results in the sale of 20 (¥20,000 million) at 58.00 bp, 20 (¥20,000 million) at 57.75 bp and 10 (¥10,000 million) at 57.50 bp, which in total amounts to 50 (¥50,000 million) at a weighted average price of 57.80 bp.

If instead the dealer decides to make a deal to buy (bid for) the fixed interest rate, the dealer clicks the display window 422 in the Bid column of the market screen 40. This causes Mine to appear instead of Yours on the button 322 of the average price confirmation box 32. Upon deciding to go through with the transaction, the dealer can conclude a contract to buy the fixed interest rate by clicking Mine.

If the dealer decides not to make a deal at the weighted average price but to persist in selling at 59.000 bp, the dealer clicks OK in the OK, Cancel, Change section of the order input box 33. This sends the new order information to the market transaction automatic contracting apparatus 1.

When the market transaction automatic contracting apparatus 1 receives the new order information, the offer/bid setting/distributing unit 2 again conducts the processing explained earlier, i.e., sets best offers bPr and best bids bPp for each bank in consideration of the credit conditions and sends them to the transaction terminals A, B ... for display on the market screen 40. In the current example, the new order lowers the best offer bPr for a 2-year contract term from 60.000 bp to 59.000 bp, a decline of 1.000 bp, and leaves the best bid bPp unchanged at 58.000 bp. The figure appearing in the display window 421 of the market screen 40 is therefore 59.000 and the figure appearing in display window 422 is 58.000.

As explained earlier, when the market transaction automatic contracting apparatus 1 receives orders from the transaction terminals A, B ..., the offer/bid match determining unit 3 (FIG. 1) determines whether or not the orders produced a match between an offer PrA, PrB ... and a bid PpA, PpB .... In the case of a best offer bPr of 59.000 bp and a best bid bPp of 58.000 for a 2-year contract term as in the foregoing example, if a new order making an bid of 59.000 bp is received, the offer/bid match determining unit 3 decides that the offer and bid match.

The offer/bid match determining unit 3 also decides that an offer and bid match occurred when an offer is made at the weighted average price, i.e., when the participant clicks Yours or Mine.

When the offer/bid match determining unit 3 has decided that an offer and a bid match, the agreement confirmation unit 4, examines the transaction amounts of the parties concerned and the incidental conditions (MT and CS) among the transaction conditions of the parties concerned to determine whether or not their transaction amounts and incidental conditions match. When the agreement confirmation unit 4 determines that both the transaction amounts and the incidental conditions match, the contracting unit 5 immediately concludes a contract between the parties. The contracting unit 5 also sends notice of order consummation to the parties' transaction terminals, together with the incidental conditions, the contract price and the like.

When the agreement confirmation unit 4 determines that one or both of the transaction amounts and the incidental conditions do not match, it sends information regarding the disagreeing portion to the transaction terminal of both parties. If upon reading the displayed information one party modifies the disagreeing portion and sends the modification back to the agreement confirmation unit 4, the agreement confirmation unit 4 determines based on the modified information whether or not the transaction amounts and the incidental conditions now coincide. When it is found that coincidence (agreement) has been achieved regarding both the transaction amounts and the incidental conditions, the contracting unit 5 carries out the same operations as described above regarding the case where both the transaction amounts and the incidental conditions are found to match during the initial determination. Specifically, it immediately concludes a contract between the parties and sends notice of order consummation to the parties' transaction terminals, together with the incidental conditions, the contract price and the like.

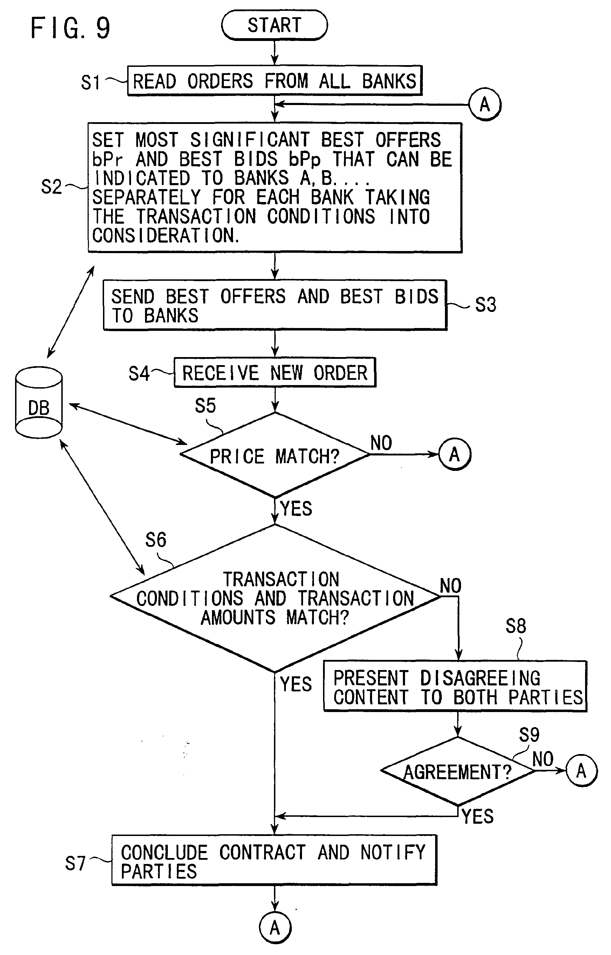

The overall control procedures executed by the market transaction automatic contracting apparatus 1 will now be explained with reference to FIG. 9.

FIG. 9 is a flowchart showing control procedures executed by the market transaction automatic contracting apparatus. This flowchart summarizes the control procedures carried out by the CPU of the market transaction automatic contracting apparatus 1 in accordance with a program stored in ROM.

First, in step S1, the orders from all banks A, B ... are read.

Next, in step S2, the most significant best offers bPr and best bids bPp that can be indicated to banks A, B ... are set separately for each bank taking the transaction conditions (CH and AL) into consideration.

Next, in step S3, the set best offers bPr and best bids bPp are sent to the banks A, B ...

Next, in step S4, new orders are received from the banks.

Next, in step S5, a determination is made as to whether or not a price match exists, i.e., whether or not a match is present between the offers PrA, PrB ... and the bids PpA, PpB ... contained in the orders from the banks. When the result in step 5 is NO, control returns to step 2. When it is YES, control goes to step 6.

In step 6, it is determined whether or not both the transaction conditions (MT and CS) and the transaction amounts of the parties concerned match. When the result in S6 is NO, control passes to step S8. When it is YES, control goes to step S7.

In step S8, the disagreeing content is presented to both parties concerned.

Next, in step S9, a determination is made as to whether or not agreement was reached on the disagreeing content. When the result in step S9 is NO, control returns to step S2. When it is YES, control passes to step S7.

In step 7, a contract is concluded between the parties and both parties are sent the various information necessary for the contract. Control then returns to step S2.

As explained in the foregoing, in this embodiment of the invention, the setting and distribution of the best offer bPr and the best bid bPp for each bank A, B ... are conducted with consideration to the transaction conditions. The accuracy of the best offer bPr and best bid bPp can therefore be markedly improved. The contract based on the best offer bPr and the best bid bPp can therefore be made error free and reliable. The reliability of the dealings is therefore dramatically improved over that in the conventional dealings conducted through a broker and, as a result, the amount of loss incurred by the participants is markedly reduced.

Once the offers and bids have been presented to the banks A, B ..., the participants can automatically establish transactions without going through a broker. Transaction costs are therefore greatly reduced and since trading proceeds substantially in real time, the time needed to reach an agreement can be greatly shortened. The efficiency of interest rate swap transactions is therefore dramatically improved. Moreover, owing to the improvement in transaction reliability, the reduction of costs and the improvement of transaction speed, the interest rate swap market can operate with high reliability and high efficiency. This invention therefore makes a major contribution to invigorating the financial market.

The participants A, B ... are supplied not only with the best offers bPr and best bids bPp but also with the transaction amounts quoted by the participants quoting the best offers bPr and the best bids bPp. Since the participants A, B ... can therefore easily ascertain market trends, they can make more appropriate decisions in their market dealings. In the case where a bank wants to sell ¥50,000 million, for example, it is important for the bank to know how much of the total it can sell at the best bid because the knowledge that, say, ¥5,000 million or ¥10,000 million can be sold at the best bid is seful for deciding how to sell the remaining ¥45,000 - 40,000 million. Further, since the amount that can be traded is constantly displayed, the banks feel more assured.

The credit rating of a counterparty is an important factor in financial dealings. Since the distributed best offers bPr and the best bids bPp are set taking the credit conditions into account, the difficulty of converting credit into numerical data experienced hereto for can be overcome. As credit can therefore be reliably taken into account, the reliability of the dealings is dramatically improved over that in the conventional dealings conducted through a broker and, as a result, the amount of loss incurred by the participants is markedly reduced.

Since the offers and bids with respect to banks with poor credit ratings are adjusted based on credit charges CH, transaction risk is mitigated and transactions that take credit appropriately into account can be realized.

When an offer and a bid match, the parties concerned are further allowed to agree regarding transaction amount and incidental conditions (MT and CS). A contract that runs counter to the intention of the parties can therefore be reliably prevented and the transaction can be conducted without error. Transaction reliability is enhanced in proportion.

The transaction conditions can be defined separately for different contract terms and separately for different counterparties. As the transaction conditions can therefore be fine tuned in light of the counterparty's credit, transactions can be conducted more favorably.

The connection of the transaction terminals A, B ... to the market transaction automatic contracting apparatus 1 creates a system capable of spectacularly accelerating transaction speed and thus of markedly shortening the time needed to strike a deal. The invention therefore greatly improves market transaction efficiency.

Since the participants using the transaction terminal A, B ... deal directly with one another, not through a broker, the terms of the transactions are transparent and business can be conducted with minimal anxiety.

The best offers bPr and best bids bPp sent to the transaction terminals A, B ... are attached with significance information so as to be displayed in different colors. Based on this significance information conveyed through the medium of color, the participants can accurately decide how to proceed with their transactions, thus enabling them to avoid unnecessary losses. Since the degree of significance can be instantaneously perceived through color, the time needed to reach a decision is shortened in proportion. The participants are therefore able to cope with transactions requiring split-second responses.

Transaction conditions are entered using the input screen 20 displayed on the transaction terminals A, B ... and then transmitted to the market transaction automatic contracting apparatus 1. The transaction conditions can therefore be rapidly entered and uploaded, even when the volume is considerable, and the efficiency of data input is therefore substantially improved.

When the transaction conditions input screen 20 is used for entering transaction conditions, all credit charge and amount limit entries are made at the same time over the period that their values remain constant and are automatically graphed. This work, which previously required many troublesome manual inputs, can therefore be carried out in a short time and a simple manner.

Up to this point, the market transaction automatic contracting apparatus 1 and the market transaction automatic contracting system have been explained only with respect to use in conducting interest rate swap transactions. However, the market transaction automatic contracting apparatus 1 and the market transaction automatic contracting system can be applied to any market in which objects are bought and sold at prices determined by matching offers and bids.

Consider, for example, an apple market in which apples are bought and sold in lots. In this case, the transaction conditions might be the growing area, time of shipment and apple variety. When sending offers and bids to a participant X, the offer/bid setting/distributing unit 2 would check the transaction conditions designated by participant X and send participant X only offers and bids quoted for lots that match participant X's criteria regarding growing area, time of shipment and variety. Upon occurrence of an offer/bid match, a deal would be immediately concluded and the parties informed. In this type of application, the agreement confirmation unit 4 used to confirm agreement after an offer/bid match is not absolutely necessary. In the application to interest rate swap transactions explained above, the participants are required to submit offers, bids and transaction amounts. In an apple market for buying and selling individual lots, however, submission of offers and bids is sufficient. Submission of transaction amounts is not absolutely necessary.

The invention constituted in the foregoing manner manifests the effects explained in the following.

In this invention, the setting and distribution of the best offer and the best bid for each participant are conducted with consideration to the transaction conditions. The accuracy of the best offer and best bid can therefore be markedly improved. The contract based on the best offer and the best bid can therefore be made error free and reliable. The reliability of the dealings is therefore dramatically improved over that in the conventional dealings conducted through a broker and, as a result, the amount of loss incurred by the participants is markedly reduced.

Once the offers and bids have been presented to the participants, the participants can automatically establish transactions without going through a broker. Transactions costs are therefore greatly reduced and since trading proceeds substantially in real time, the time needed to reach an agreement can be greatly shortened. The efficiency of market transactions is therefore dramatically improved.

The invention can be configured for application to interest rate swap transactions. As such, it enables this market to operate with high reliability and high efficiency, thereby making a major contribution to financial market invigoration.

The participants are supplied not only with the best offers and best bids but also with the transaction amounts quoted by the participants quoting the best offers and the best bids. The participants can therefore make more appropriate decisions in their market dealings.

Since the setting and distribution of the best offers and the best bids are conducted with consideration to credit conditions in this invention, the accuracy of the information relating to the best offers and best bids is markedly better than in the case where, as has heretofore been unavoidable owing to the difficulty of converting credit into numerical data, the accuracy of the information depends on the experience and intuition of a broker. The invention therefore enables conclusion of reliable, error-free contracts. The credit rating of the counterparty is an especially important factor in financial dealings. This invention converts credit information into numerical data and, by taking this data fully into consideration, achieves a quantum improvement in the reliability of the dealings over that in conventional dealings conducted through a broker. As a result, the amount of loss incurred by the participants is markedly reduced.

In this invention, since the distributed offers and bids with respect to banks with poor credit ratings are adjusted based on credit charges, transaction risk is mitigated and transactions that take credit appropriately into account can be realized.

When an offer and a bid match, the parties concerned are further allowed to agree regarding transaction amount and incidental conditions. A contract that runs counter to the intention of the parties can therefore be reliably prevented and the transaction can be conducted without error. Transaction reliability is enhanced in proportion.

The transaction conditions can be defined separately for different contract terms and separately for different counterparties. As the transaction conditions can therefore be fine tuned in light of the counterparty's credit, transactions can be conducted more favorably.

The connection of the transaction terminals to the market transaction automatic contracting apparatus according to this invention creates a system capable of spectacularly accelerating transaction speed and thus of markedly shortening the time needed to strike a deal. The invention therefore greatly improves market transaction efficiency.

Since the participants using the transaction terminal deal directly with one another, not through a broker, the terms of the transactions are transparent and business can be conducted with minimal anxiety.

In this invention, the best offers and best bids sent to the transaction terminals are attached with significance information. Based on this significance information, the participants can accurately decide how to proceed with their transactions, thus enabling them to avoid unnecessary losses.

In this invention, the best offers and best bids distributed to the transaction terminals are displayed in different colors. Since the degree of significance of the best offers and best bids can therefore be instantaneously perceived, the time needed to reach a decision is shortened in proportion. The participants are therefore able to cope with transactions requiring split-second responses.

In this invention, transaction conditions are entered using the input screen displayed on the transaction terminals and then transmitted to the market transaction automatic contracting apparatus. The transaction conditions can therefore be rapidly entered and uploaded, even when the volume is considerable, and the efficiency of data input is therefore substantially improved.

In this invention, when the transaction conditions input screen is used for entering transaction conditions, all credit charge and amount limit entries are made at the same time over the period that their values remain constant and are automatically graphed. This work, which previously required many troublesome manual inputs, can therefore be carried out in a short time and a simple manner.

## Claims

1. A market transaction automatic contracting apparatus for use by parties concluding contracts with each other regarding offers and bids placed on objects by multiple participating parties, the apparatus comprising:
a transaction conditions storage section (6) for storing transaction conditions set beforehand by participants,
offer/bid setting/distributing means (2) for reading offers and bids made by the participants, and, with consideration to the transaction conditions, setting and distributing best offers and best bids most significant for each participant,
offer/bid match determining means (3) responsive to offers and bids made by the participants or responsive to new offers and bids made by the participants based on the distributed best offers and best bids for determining whether a match occurred between an offer and a bid, and
contracting means (5) responsive to a match between an offer and a bid for concluding a transaction contract between the participant making the offer and the participant making the bid as contracting parties.

2. A market transaction automatic contracting apparatus according to claim 1, wherein the objects are fixed interest rates, the participants are financial institutions, and the offers and bids are offers and bids for fixed interest rates in interest rate swaps between fixed interest rates and floating interest rates in the financial institution market.

3. A market transaction automatic contracting apparatus according to claim 2, wherein the offer/bid setting/distributing means (2) reads offers, bids and transaction amounts quoted by the participants and, with consideration to the transaction conditions, sets and distributes a best offer and a best bid most significant for each participant.

4. A market transaction automatic contracting apparatus according to claim 3, wherein the offer/bid setting/distributing means (2), when distributing the best offer and best bid, also distributes the transaction amounts quoted by the participants making the best offer and the best bid.

5. A market transaction automatic contracting apparatus according to claim 2, wherein the transaction conditions considered by the offer/bid setting/distributing means (2) are credit conditions relating to credit ratings set by the participant concerned with respect to the other participants.

6. A market transaction automatic contracting apparatus according to claim 5, wherein the credit conditions are credit charge and amount limit.

7. A market transaction automatic contracting apparatus according to claim 6, wherein the offer/bid setting/distributing means (2) regulates the offer and bid distributed to a financial institution whose credit is small based on credit charge to make the distributed offer high and the distributed bid low.

8. A market transaction automatic contracting apparatus according to claim 3, further comprising an agreement confirmation means (4) responsive to a determination by the offer/bid match determining means (3) that an offer and a bid match for determining, with consideration to the transaction amounts of the parties and incidental conditions among the transaction conditions of the parties, whether or not the transaction amounts and the incidental conditions match, and, if they do not, presenting the transaction amounts and the incidental conditions to both parties to confirm their agreement,
the contracting means (5) concluding a transaction contract after the confirmation by the agreement confirmation means (4).

9. A market transaction automatic contracting apparatus according to claim 8, wherein the incidental conditions are mutual termination and cash settlement.

10. A market transaction automatic contracting apparatus according to claim 2, wherein the transaction conditions can be set individually for each contract term or each transaction party.

11. A market transaction automatic contracting system for use by parties concluding contracts with each other regarding offers and bids placed on objects by multiple participating parties, the system comprising:
a market transaction automatic contracting apparatus including a transaction conditions storage section (6) for storing transaction conditions set beforehand by participants, offer/bid setting/distributing means (2) for reading offers and bids made by the participants, and, with consideration to the transaction conditions, setting and distributing best offers and best bids most significant for each participant, offer/bid match determining means (3) responsive to offers and bids made by the participants or responsive to new offers and bids made by the participants based on the distributed best offers and best bids for determining whether a match occurred between an offer and a bid, and contracting means (5) responsive to a match between an offer and a bid for concluding a transaction contract between the participant making the offer and the participant making the bid as contracting parties, and
transaction terminals connected to the market transaction automatic contracting apparatus through communication circuits to be operable by the participants for sending information to and receiving information from the market transaction automatic contracting apparatus.

12. A market transaction automatic contracting system according to claim 11, wherein the objects are fixed interest rates, the participants are financial institutions, and the offers and bids are offers and bids for fixed interest rates in interest rate swaps between fixed interest rates and floating interest rates in the financial institution market.

13. A market transaction automatic contracting system according to claim 12, wherein the transaction terminals are equipped with displays and the offer/bid setting/distributing means (2) distributes the best offer and the best bid for display on the displays of the transaction terminals and, upon determining with consideration to the transaction conditions how significant the displayed best offer and best bid are for the participants operating the transaction terminals, simultaneously distributes determined significance information together with the best offer and best bid.

14. A market transaction automatic contracting system according to claim 13, wherein the determined significance information includes information for displaying the best offer or best bid in a first color when a participant operating a transaction terminal can immediately conclude a contract with the participant offering the displayed best offer or bid, information for displaying the best offer or best bid displayed in a second color when the participant operating the transmission terminal can conclude a contract if agreement is reached on the transaction conditions, and information for displaying the best offer or best bid in a third color when the offer or bid was sent by the participant operating the transaction terminal.

15. A market transaction automatic contracting system according to claim 12, wherein the transaction terminals are equipped with displays to enable a participant operating a transaction terminal who sets transaction conditions to input and send them to the market transaction automatic contracting apparatus using a transaction conditions input screen displayed on the display.

16. A market transaction automatic contracting system according to claim 15, wherein, among the transaction conditions input using the transaction conditions input screen, all credit charge and amount limit entries are made at the same time over the period that their values remain constant and are automatically graphed on a graph whose vertical axis represents term and whose horizontal axis represents credit charge value or amount limit.
